# EUROPÄISCHE PATENTSCHRIFT

(11) **EP 4 483 132 B1**
(45) Veröffentlichungstag und Bekanntmachung des Hinweises auf die Patenterteilung: **23.09.2026**
(21) Anmeldenummer: 23708177.3
(22) Anmeldetag: 23.02.2023
(51) Int. Cl.: G01B 11/26, H01M 10/04, H01M 10/0585, G01B 11/02

(54) **MESSVORRICHTUNG ZUR VERMESSUNG DER AUSRICHTUNG UND/ODER ORIENTIERUNG VON SEGMENTEN DER ENERGIEZELLEN PRODUZIERENDEN INDUSTRIE UND VERFAHREN ZUR HERSTELLUNG VON SEGMENTEN**
MEASURING DEVICE FOR MEASURING THE ALIGNMENT AND/OR ORIENTATION OF SEGMENTS IN THE ENERGY-CELL-PRODUCING INDUSTRY, AND METHOD FOR PRODUCING SEGMENTS
DISPOSITIF DE MESURE POUR MESURER L'ALIGNEMENT ET/OU L'ORIENTATION DE SEGMENTS DANS L'INDUSTRIE DE PRODUCTION DE CELLULES D'ÉNERGIE, ET PROCÉDÉ DE PRODUCTION DE SEGMENTS

(30) Priorität: 24.02.2022 DE 102022104471
(43) Veröffentlichungstag der Anmeldung: 01.01.2025
(73) Patentinhaber: Körber Technologies GmbH, 21033 Hamburg (DE)
(72) Erfinder: LOHSE, Stefan, 21483 Dalldorf (DE); SACHER, Dirk, 21465 Wentorf (DE); HROCH, Ronald, 22946 Trittau (DE); IBEL, Michael, 25469 Halstenbek (DE)
(74) Vertreter: Müller Verweyen
(86) Internationale Anmeldenummer: PCT/EP2023/054532
(87) Internationale Veröffentlichungsnummer: WO 2023/161329

(56) Entgegenhaltungen:
- WO-A1-2021/002492
- US-A1- 2019 341 658
- US-A1- 2020 144 089

## Beschreibung

Die vorliegende Erfindung betrifft eine Messvorrichtung zur Vermessung der Ausrichtung und/oder Orientierung von Segmenten der Energiezellen produzierenden Industrie auf einem Segmentstapel, sowie ein Verfahren zur Herstellung von Segmenten der Energiezellen produzierenden Industrie.

Vorrichtungen zur Herstellung eines Zellstapels für die Batteriezellenfertigung sind beispielsweise aus DE 10 2017 216 138 A1 und DE 10 2017 216 213 A1 bekannt.

In der Batteriezellenfertigung werden einzelne Verbund-Segmente, beispielsweise Monozellen umfassend die Schichten Separator, Kathode, Separator, Anode, zu einem Segmentstapel gestapelt, der auch als Verbundzelle oder Unifiedcell bezeichnet wird. Dabei ist es sehr wichtig, dass die Segmente genau, in einem definierten Toleranzbereich, übereinandergestapelt werden.

WO 2021/002492 A1 offenbart eine Messvorrichtung nach dem Oberbegriff von Anspruch 1. US 2020/0144089 A1 offenbart eine weitere Messvorrichtung zur Vermessung von Segmenten eines Segmentstapels.

Die Aufgabe der Erfindung besteht darin, eine Messvorrichtung und ein Verfahren bereitzustellen, mit denen die Ablagegenauigkeit, insbesondere Positions- und Rotationswinkelabweichungen, einzelner Segmente zu dem Segmentstapel in einem kontinuierlichen Produktionsprozess erkannt bzw. vermessen werden können.

Die Erfindung löst diese Aufgabe mit den Merkmalen der unabhängigen Ansprüche.

Erfindungsgemäß weist die Messvorrichtung mindestens eine optische Entfernungsmesseinrichtung auf, die in einer Messbeziehung zu einer Seitenfläche des Segmentstapels angeordnet und zur Messung der Entfernung zu dem Segmentstapel an mindestens einer Position entlang einer Stapelachse eingerichtet ist. Die Stapelachse ist dabei die Achse senkrecht zu einer flächigen Erstreckung der Segmente in dem Stapel. Die Segmente in dem Stapel sind in der Regel flächig ausgebildet, die flächige Erstreckung ist dann durch die Ebene der Segmentfläche definiert. In der Regel ist die Stapelachse parallel zu der Ablagerichtung orientiert, das ist die Richtung, in der die Segmente auf den Segmentstapel abgelegt werden. Häufig ist die Stapelachse vertikal orientiert. Die Entfernungsmessung zu dem Segmentstapel erlaubt die Bestimmung der Abweichung des Segmentstapels in mindestens einer Richtung senkrecht zu der Stapelachse und an mindestens einer Position entlang der Stapelachse. Aufgrund der Messung an der Seitenfläche des Segmentstapels ist die erfindungsgemäße Messvorrichtung sowohl für transparente als auch für intransparente Segmente bzw. Segmentbestandteile wie Separatorfolien geeignet. Die erfindungsgemäße Messvorrichtung ist geeignet, jedes auf dem Segmentstapel abgelegte Segment in Bezug auf Abweichungen relativ zu den bereits auf dem Segmentstapel abgelegten Segmenten in Echtzeit zu vermessen und somit die Ablagegenauigkeit in Echtzeit zu bestimmen.

Durch die erfindungsgemäße Messvorrichtung kann schon während des Stapelns der Segmente erkannt werden, ob die Positionierung und/oder Ausrichtung der Segmente relativ zum Segmentstapel innerhalb eines zulässigen Toleranzbereichs liegt. Bei einer nicht tolerierbaren Abweichung können geeignete Maßnahmen automatisch veranlasst werden. Beispielsweise kann ein fehlerhafter Segmentstapel aussortiert werden. In einer anderen Ausführungsform kann eine Einrichtung zur Positionskorrektur eines fehlpositionierten Segments angesteuert werden, um dieses in die gewünschte Position zu bringen. Durch die mittels der Erfindung erreichte genaue Positionierung der Segmente übereinander wird die Kapazität und Lebensdauer der damit aufgebauten Energiezellen erhöht.

Erfindungsgemäß weist die Messvorrichtung eine Mehrzahl von optischen Entfernungsmesseinrichtungen auf, die in einer Messbeziehung zu unterschiedlichen Seiten des Segmentstapels angeordnet sind. Auf diese Weise kann vorteilhaft die Abweichung des Segmentstapels in beiden Richtungen senkrecht zu der Stapelachse bestimmt werden.

Erfindungsgemäß weist die Messvorrichtung eine Mehrzahl von optischen Entfernungsmesseinrichtungen auf, die einer Messbeziehung zu derselben Seitenfläche des Segmentstapels an unterschiedlichen Messpositionen angeordnet sind. Dies gestattet durch geeignete geometrische Auswertung die Bestimmung des Rotationswinkels des gemessenen Segments um die Stapelachse. Die Entfernung zum Segmentstapel kann vorteilhaft aus dem Mittelwert der Entfernungsmesseinrichtungen, die derselben Seitenfläche des Segmentstapels zugeordnet sind, ermittelt werden. Alternativ kann die von einer Entfernungsmesseinrichtung gemessene Entfernung verwendet werden.

Vorzugsweise sind die optischen Achsen der Entfernungsmesseinrichtungen, die der gleichen Seitenfläche des Segmentstapels zugeordnet sind, parallel zueinander angeordnet und weisen einen positiven Abstand voneinander auf. In diesem Fall hängt der zu messende Rotationswinkel nur von der Differenz der gemessenen Abstände ab, was die Auswertung erheblich vereinfacht. In dieser Ausführung kann mittels einer trigonometrischen Auswertung, beispielsweise Arcustangens-Bildung, der Differenz der beiden gemessenen Entfernungen im Verhältnis zu dem bekannten Abstand der beiden optischen Achsen voneinander der Rotationswinkel auf einfache Weise bestimmt werden. Zur Verbesserung der Messgenauigkeit sind die Entfernungsmessvorrichtungen so angeordnet, dass der Abstand der Messpositionen voneinander mindestens halb so groß ist wie eine entsprechende Seitenlänge des Segmentstapels.

Nach dem zuvor Gesagten weist die Messvorrichtung mindestens drei optischen Entfernungsmesseinrichtungen auf, um die Positionsabweichungen jedes Segments relativ zu den bereits auf dem Stapel abgelegten Segmenten in beiden Richtungen senkrecht zur Stapelachse und den Rotationswinkel um die Stapelachse bestimmen zu können. Mit den einzelnen Entfernungsmesseinrichtungen werden vorteilhaft die absoluten Abstände bzw. Entfernungen der Segmente zu der jeweiligen Entfernungsmesseinrichtung gemessen. Mithilfe dieser Messwerte lassen sich dann die gewünschten Werte berechnen. Die Lagegenauigkeit wird also an drei Positionen bestimmt, um eine fehlerfreie Weiterverarbeitung der gestapelten Segmente in hoher Qualität gewährleisten zu können. Die Positionsgenauigkeit des Ablagestapels ist dabei essentiell zur weiteren Verarbeitung des Segmentstapels zur Batteriezelle und deren Lebensdauer.

Erfindungsgemäß weist die Messvorrichtung eine Auswerteeinheit auf, die zur Ermittlung der Position mindestens eines Segments des Segmentstapels in zwei Richtungen senkrecht zu der Stapelachse und eines Rotationswinkels um die Stapelachse eingerichtet ist. Die Auswerteeinheit kann insbesondere eine digitale Datenverarbeitungseinrichtung sein. Die Auswerteeinheit kann eine separate Einheit der Messvorrichtung und/oder Teil der Maschinensteuerung sein.

In einer vorteilhaften Ausführungsform arbeiten die oder sämtliche optischen Entfernungsmesseinrichtungen mittels Triangulation, d.h. es handelt sich um Triangulationssensoren, insbesondere Lasertriangulationssensoren. Dabei wird Laserlicht auf die entsprechende Seitenfläche oder Kante des Segmentstapels projiziert und unter einem anderen Winkel von einem Detektor, vorzugsweise mit einer lichtempfindlichen Pixelanordnung in Form von Zeile oder Matrix, oder einem bildgebenden Sensor, detektiert. Dadurch kann die Entfernung geometrisch nach dem Triangulationsprinzip vermessen werden, weil die Position des Laserlichts auf dem Detektor von der Entfernung zu dem Segmentstapel abhängt.

In einer bevorzugten Ausführungsform wird eine Laserlinie auf die entsprechende Seitenfläche oder Kante des Segmentstapels projiziert, wobei die Laserlinie vorzugsweise parallel zu der Stapelachse orientiert ist. Es handelt es sich also vorzugsweise um eine 2D-Messeinrichtung. Dies hat den Vorteil, dass eine Mehrzahl oder sämtliche gestapelten Segmente des Segmentstapels gleichzeitig vermessen werden können.

Es ist möglich, statt eines 2D-Messsystems ein kostengünstigeres 1D-Messsystem zu verwenden. In dieser Ausführungsform wird vorteilhaft ein Laserpunkt auf die entsprechende Seitenfläche oder Kante des Segmentstapels projiziert.

Vorteilhaft ist die Ablageeinrichtung für den Segmentstapel relativ zu der Messvorrichtung entlang der Stapelachse gesteuert verfahrbar. Dadurch wird entweder der Segmentstapel oder die Messvorrichtung entlang der Stapelachse verfahren, damit sämtliche gestapelten Segmente erfasst werden können. Dies ist insbesondere im Fall eines auf den Segmentstapels projizierten Laserpunkts vorteilhaft. Die Ablageeinrichtung kann beispielsweise ein Ablagetisch oder ein nach oben geöffneter Ablagebehälter sein.

Die oder sämtliche optischen Entfernungsmesseinrichtungen sind demnach vorzugsweise Laserscaneinrichtungen, die zur Projektion eines Laserpunkts oder einer Laserlinie auf die entsprechende Seitenfläche des Segmentstapels eingerichtet sind.

In einer anderen vorteilhaften Ausführungsform arbeiten die oder sämtliche optischen Entfernungsmesseinrichtungen mittels Laufzeitmessung. Es handelt sich dabei vorteilhaft um Lidar-Sensoren.

Gemäß einem Aspekt der Erfindung wird eine Maschine zur Herstellung von Energiezellen bereitgestellt, die einen Stapelabschnitt zum Stapeln von Segmenten zu einem Segmentstapel auf einer Ablageeinrichtung umfasst, wobei der Stapelabschnitt eine zuvor beschriebene Messvorrichtung aufweist.

Die Auswerteeinheit ist vorteilhaft zur Aufzeichnung der Messwerte über die Zeit eingerichtet. Vorzugsweise ist die Auswerteeinheit zur Verknüpfung der zeitlichen Messwerte mit einer Position der Ablageeinrichtung entlang der Stapelachse eingerichtet, wodurch ein zeit- und/oder positionsabhängiges Datenfeld erhalten wird. Die Auswerteeinheit ist bevorzugt zur Auswertung des Datenfelds und zur Ermittlung von einzelnen Segmentpositionen mittels der Auswertung eingerichtet.

Die Maschine zur Herstellung von Energiezellen weist bevorzugt Bereitstellungsmittel A zum Bereitstellen von Elektrodenmaterial des Typs A und/oder Bereitstellungsmittel B zum Bereitstellen von Elektrodenmaterial des Typs B und/oder Bereitstellungsmittel C zum Bereitstellen von Separatormaterial des Typs C, eine Förderanordnung F1A zum Fördern von bahnförmig bereitgestelltem Elektrodenmaterial des Typs A, eine Schneideinrichtung zum Schneiden des bahnförmig bereitgestellten Elektrodenmaterials des Typs A in Segmente (31) des Typs AS, eine Förderanordnung F2A zum Fördern der Segmente (31) des Typs AS, und einen Stapelabschnitt (40) zum Stapeln der Segmente (31) zu einem Segmentstapel (30) auf einer Ablageeinrichtung (41) auf.

Die Förderanordnung F1A weist bevorzugt eine Abzugseinheit zum Abziehen des bahnförmig bereitgestellten Elektrodenmaterials des Typs A und mehrere zueinander, unter Ausbildung freiliegend oder angriffsfrei gestalteter Führungsabschnitte beabstandet angeordnete Umlenkorgane, bevorzugt in Form einer Rotationskörperanordnung F1AR aus einander beabstandet nachgeordneten Rotationskörpern, insbesondere in Form einer Trommelanordnung F1AT aus einander beabstandet nachgeordneten Trommeln, auf.

Die Förderanordnung F2A weist bevorzugt eine Rotationskörperanordnung F2AR, bevorzugt in Form mehrerer zueinander benachbart angeordneter, jeweils oder zumindest teilweise mit einer gesteuert zu- und abschaltbaren Haltekraft, insbesondere Vakuum, beaufschlagbarer Rotationskörper, auf.

Die Maschine zur Herstellung von Energiezellen weist bevorzugt eine Förderanordnung F1B zum Fördern von bahnförmig bereitgestelltem Elektrodenmaterial des Typs B, eine Schneideinrichtung zum Schneiden des bahnförmig bereitgestellten Elektrodenmaterials des Typs B in Segmente (31) des Typs BS und eine Förderanordnung F2B zum Fördern der Segmente (31) des Typs BS auf.

Die Förderanordnung F1B weist bevorzugt eine Abzugseinheit zum Abziehen des bahnförmig bereitgestellten Elektrodenmaterials des Typs B und mehrere zueinander, unter Ausbildung freiliegend oder angriffsfrei gestalteter Führungsabschnitte beabstandet angeordnete Umlenkorgane, bevorzugt in Form einer Rotationskörperanordnung F1BR aus einander beabstandet nachgeordneten Rotationskörpern, insbesondere in Form einer Trommelanordnung F1BT aus einander beabstandet nachgeordneten Trommeln, auf.

Die Förderanordnung F2B weist bevorzugt eine Rotationskörperanordnung F2BR, bevorzugt in Form mehrerer zueinander benachbart angeordneter, jeweils oder zumindest teilweise mit einer gesteuert zu- und abschaltbaren Haltekraft, insbesondere Vakuum, beaufschlagbarer Rotationskörper, auf.

Die Maschine zur Herstellung von Energiezellen weist bevorzugt einen Stapelabschnitt (40) zum Stapeln der Segmente (31) zu einem Segmentstapel (30) auf. In dem Stapelabschnitt (40) ist bevorzugt eine Ablagevorrichtung (41) zur Aufnahme der Segmente (31) vorgesehen. Die Ablagevorrichtung (41) ist bevorzugt vertikal und/oder horizontal beweglich angeordnet. Dem Stapelabschnitt (40) ist bevorzugt eine Fördereinrichtung (39) zugeordnet, bevorzugt oberhalb der Ablagevorrichtung (41). Die Fördereinrichtung (39) ist bevorzugt als rotierend antreibbarer Rotationskörper ausgebildet, insbesondere in Form einer Fördertrommel.

Die Fördereinrichtung (39) ist bevorzugt als rotierend antreibbarer Rotationskörper ausgebildet, wobei die Rotation während eines Umlaufs des Rotationskörpers, insbesondere umlaufabschnittsweise, beschleunigbar, verzögerbar und/oder gleichförmig steuerbar vorgesehen ist.

Der rotierend antreibbare Rotationskörper weist bevorzugt eine Radial-Gruppe von Erhebungen und/oder eine Radial-Gruppe von Vertiefungen auf, die bevorzugt in Umfangsrichtung verteilt und beabstandet zueinander angeordnet sind, insbesondere in einer alternierenden Abfolge, wie beispielsweise Erhebung, Vertiefung, Erhebung, Vertiefung, Erhebung. Der rotierend antreibbare Rotationskörper weist eine Axial-Gruppe von Erhebungen und/oder eine Axial-Gruppe von Vertiefungen auf, die bevorzugt in Richtung der Längserstreckung des Rotationskörpers verteilt und beabstandet zueinander angeordnet sind, insbesondere auf der Mantelfläche des Rotationskörpers.

Die Fördereinrichtung (39) ist bevorzugt ausgebildet wie in der DE 10 2021 207 342 A1 beispielsweise in den Absätzen [0031] und [0035] (dort Entnahmevorrichtung 11) und/oder in der DE 10 2022 105 399.7 auf S. 29 Zeile 13 bis S. 50 Zeile 9, DE 10 2022 105 396.2 auf S. 21 Zeile 8 bis S. 36 Zeile 4 und/oder DE 10 2022 105 397.0 auf S. 28 Zeile 19 bis S. 53 Zeile 14 (dort jeweils Entnahmevorrichtung 111 mit zugehörigem Ablageorgan 112) beschrieben, deren Offenbarungsgehalt insoweit in die vorliegende Anmeldung aufgenommen wird.

Die Messvorrichtung (10), insbesondere eine Auswerteeinheit (20) der Messvorrichtung (10), ist bevorzugt mit einer Steuereinrichtung über eine Datenleitung - drahtgebunden oder drahtlos - verbunden.

Die Steuereinrichtung ist bevorzugt mit der Fördereinrichtung (39) über eine Datenleitung - drahtgebunden oder drahtlos - verbunden und ausgebildet und eingerichtet, Steuersignale an die Fördereinrichtung (39) zu übermitteln. Die Steuersignale sind bevorzugt auf Basis der ausgewerteten Messsignale und deren Vergleich mit Sollvorgaben ermittelt.

Die Steuereinrichtung steuert die Fördereinrichtung (39), die bevorzugt als rotierend antreibbarer Rotationskörper ausgebildet ist. In Abhängigkeit der ausgewerteten Messsignale und deren Vergleich mit vorgebbaren Sollvorgaben, wie Absolutvorgaben, Grenzwerten, Mittelwerten und/oder Toleranzbereichen steuert die Steuereinrichtung die Rotation des Rotationskörpers während eines Umlaufs des Rotationskörpers, insbesondere umlaufabschnittsweise, in Form einer Beschleunigung, Verzögerung und/oder einer gleichförmig umlaufenden Bewegung.

Die Maschine zur Herstellung von Energiezellen ist in einer bevorzugten Ausführungsform ausgebildet und eingerichtet, die Energiezellen nach einem Z-Faltverfahren herzustellen und in einem Stapelabschnitt (40) auf einer Ablagevorrichtung (41) zur Aufnahme der Segmente (31) einen Stapel zu formen, bei dem die einzelnen Elektrodenlagen voneinander durch eine mäanderförmig um jede Elektrodenlage herumgeführte Separatorbahn voneinander getrennt positioniert sind und bei dem an zwei einander gegenüberliegenden Seiten mehrere Faltabschnitte der Separatorbahn in vertikaler Richtung übereinander liegend ausgebildet sind.

Die Maschine zur Herstellung von Energiezellen weist hierzu bei dieser Ausführungsform vorteilhaft eine Separatorbahnführungseinrichtung auf, welche die um jede Elektrodenlage herumzuführende Separatorbahn von einem Bereitstellungsmittel C zum Bereitstellen von Separatormaterial des Typs C entnehmend und bis in den Stapelabschnitt (41) heranführend ausgebildet ist.

Bei dieser Ausführungsform der Maschine ist eine Messvorrichtung (10) vorgesehen, die auf eine Seite des Stapels mit den mehreren Faltabschnitten ausgerichtet positioniert ist und/oder auf eine Seite des Stapels ausgerichtet positioniert ist, die an die Seite des Stapels mit den mehreren Faltabschnitten angrenzt.

Die vorliegend beschriebene Messvorrichtung kann mit Vorteil zum Prüfen eines Z-gefalteten Stapels verwendet werden, insbesondere zum Prüfen der Stapelseiten mit Faltabschnitten einer Z-gefalteten Separatorbahn.

Die Erfindung stellt ebenfalls ein Verfahren zur Herstellung von Energiezellen bereit, wobei Segmente zu einem Segmentstapel gestapelt werden. Mittels mindestens einer optische Entfernungsmesseinrichtung, die in einer Messbeziehung zu einer Seitenfläche des Segmentstapels angeordnet wird, wird die Entfernung zu dem Segmentstapel an mindestens einer Position entlang einer Stapelachse gemessen.

Die Erfindung wird im Folgenden anhand bevorzugter Ausführungsformen unter Bezugnahme auf die beigefügten Figuren erläutert. Dabei zeigt
- Fig. 1: eine schematische Draufsicht von oben auf eine Messvorrichtung in einer Ausführungsform;
- Fig. 2: eine schematische Draufsicht von oben auf eine Messvorrichtung in einer weiteren Ausführungsform;
- Fig. 3: eine schematische Ansicht einer Messvorrichtung von der Seite;
- Fig. 4: ein schematisches Ablaufdiagramm zur Illustrierung eines Messverfahrens; und
- Fig. 5: ein Diagramm, das ein mittels einer Messvorrichtung gewonnenes Datenfeld illustriert.

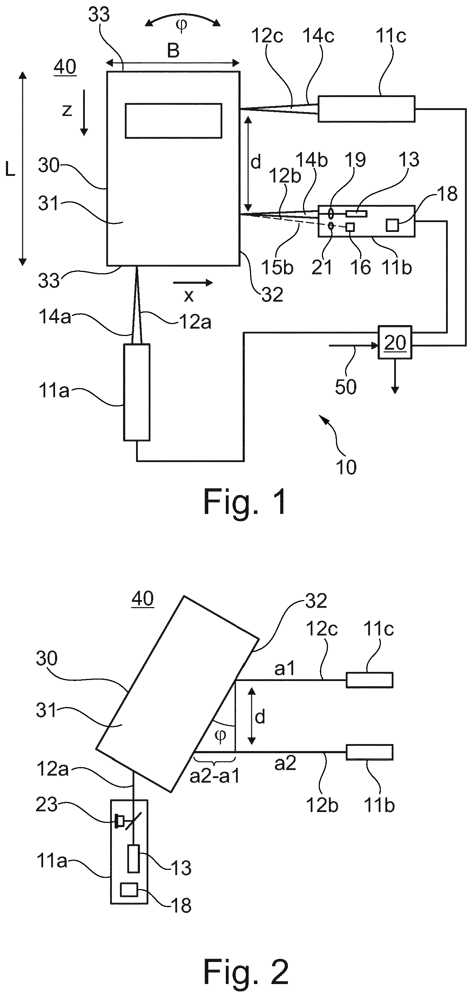

In Figur 1 ist ein Segmentstapel 30, insbesondere ein Batteriezellenstapel, von oben gezeigt. Der Segmentstapel 30 besteht aus einer sich wiederholenden Abfolge von Elektroden, nämlich Anoden und Kathoden, sowie dazwischen liegenden Separatorfolien. Auf den Segmentstapel 30 werden in einer Ablagerichtung, hier von oben, Segmente 31 auf dem Segmentstapel 30 abgelegt. Die Segmente 31 sind vorzugsweise rechteckig, so dass sich ein quaderförmiger Segmentstapel 30 ergibt. Die Segmente 31 können eine Seitenfläche 32 mit der Seitenlänge L und eine Seitenfläche 33 mit der Seitenlänge B aufweisen, wobei L>B oder L=B sein kann. Die hier vertikale Ablagerichtung wird als y-Richtung bezeichnet und verläuft in den Figuren 1 und 2 senkrecht zur Papierebene. Die y-Achse wird auch als Stapelachse bezeichnet. Die seitlichen Richtungen x und z sind in Figur 1 gezeigt. Die z-Richtung verläuft beispielsweise parallel zu der Längsseite und die x-Richtung parallel zu der kurzen Seite des Segments 31. Die abgelegten Segmente 31 können einzelne Elektroden und Separatorblätter sein, oder Einheiten bestehend aus einer Mehrzahl von aufeinander gelegten und/oder miteinander verbundenen Elektroden und Separatorblättern, beispielsweise Monozellen jeweils bestehend aus Separator - Kathode - Separator - Anode, oder Einheiten mit einer beliebigen anderen Schichtenfolge aus Elektroden und Separatorblättern.

Die Messvorrichtung 10 ist seitlich zu dem Segmentstapel 30 angeordnet und weist vorteilhaft eine Mehrzahl von beispielsweise drei Entfernungsmesseinrichtungen 11a, 11b, 11c auf. Jede Entfernungsmesseinrichtung 11a, 11b, 11c ist in einer Messbeziehung zu einer Seitenfläche 32, 33 des Segmentstapels 30 angeordnet. Vorzugsweise ist mindestens eine Entfernungsmesseinrichtung 11a in einer Messbeziehung zu einer Seitenfläche 32 und mindestens eine Entfernungsmesseinrichtung 11b, 11c in einer Messbeziehung zu einer dazu senkrechten Seitenfläche 33 des Segmentstapels 30 angeordnet.

Die Entfernungsmesseinrichtungen 11a, 11b, 11c sind vorzugsweise Lasermesseinrichtungen und zur Messung der Entfernung des Segmentstapels 30 von der jeweiligen Entfernungsmesseinrichtung 11a, 11b, 11c eingerichtet. Vorzugsweise sind die Entfernungsmesseinrichtungen 11a, 11b, 11c zur Messung der Position des obersten abgelegten Segments 31 in den Richtungen x, z senkrecht zu der Ablagerichtung y eingerichtet. Zu diesem Zweck weisen die optischen Achsen 12a, 12b, 12c von mindestens zwei der Entfernungsmesseinrichtungen 11a, 11b, 11c in einer Draufsicht auf den Segmentstapel 30 von oben einen Winkel von mindestens 10°, vorzugsweise mindesten 45°, weiter vorzugsweise 90° zueinander auf. Im Beispiel der Figur 1 sind dies die Entfernungsmesseinrichtungen 11a und 11b sowie die Entfernungsmesseinrichtungen 11a und 11c. Auf diese Weise wird vorteilhaft durch die Entfernungsmesseinrichtungen 11a, 11b, 11c bzw. deren optische Achsen 12a, 12b, 12c die Messebene x, z aufgespannt. Die optische Achse 12a, 12b, 12c einer Entfernungsmesseinrichtung 11a, 11b, 11c bezieht sich dabei in der Regel auf den von der Entfernungsmesseinrichtung 11a, 11b, 11c ausgehenden Licht- bzw. Laserstrahl 14a, 14b, 14c.

In der Ausführungsform gemäß Figur 1 sind die Entfernungsmesseinrichtungen 11a, 11b, 11c als Triangulationssensoren ausgeführt, d.h. sie arbeiten nach dem Lasertriangulationsprinzip. Dies wird beispielhaft anhand der Entfernungsmesseinrichtung 11b erläutert. Die Entfernungsmesseinrichtung 11b weist eine Laserlichtquelle 13 zur Erzeugung eines Laserlichtstrahls 14b auf, der bzw. dessen optische Achse 12b auf den Segmentstapel 30 gerichtet ist. Die Entfernungsmesseinrichtung 11b kann eine Fokussieroptik 19 aufweisen, um den Laserstrahl 14b auf die Seitenfläche des Segmentstapels 30 zu fokussieren.

Die Entfernungsmesseinrichtung 11b weist des Weiteren einen bildgebenden Sensor 16 auf, der zum Detektieren des von dem Segmentstapel 30 reflektierten Laserstrahls 15b eingerichtet ist. Die Entfernungsmesseinrichtung 11b ist so eingerichtet, dass der einfallende Laserstrahl 14b und der reflektierte Laserstrahl 15b einen von Null verschiedenen Winkel miteinander einschließen. Aus der Position des reflektierten Laserstrahls 15b auf dem bildgebenden Zeilen- oder Flächen-Detektor 16 kann durch Triangulation die Entfernung der Seitenfläche 32 des Segmentstapels 30 von der Entfernungsmesseinrichtung 11b ermittelt werden. Dies kann beispielsweise in einer elektronischen Steuereinrichtung 18 in der der Entfernungsmesseinrichtung 11b geschehen. Die Entfernungsmesseinrichtung 11b kann eine Fokussieroptik 21 aufweisen, um den Laserstrahl 15b auf den Detektor 16 zu fokussieren.

Die Entfernungsmesseinrichtung 11a ist somit zur Messung der Entfernung zum Segmentstapel 30 in z-Richtung und somit zur Messung der z-Position des Segmentstapels 30 in z-Richtung eingerichtet.

Die Entfernungsmesseinrichtungen 11b und 11c sind jeweils zur Messung der Entfernung zum Segmentstapel 30 in x-Richtung eingerichtet. Die x-Position des Segmentstapels 30 ergibt sich vorteilhaft aus dem Mittelwert der x-Entfernungen der beiden Entfernungsmesseinrichtungen 11b und 11c. Alternativ kann die mit der Entfernungsmesseinrichtung 11b gemessene Entfernung oder die mit der Entfernungsmesseinrichtung 11c gemessene Entfernung als x-Entfernung verwendet werden.

In der Ausführungsform gemäß Figur 1 sind die Entfernungsmesseinrichtungen 11a, 11b, 11c als Lidar-Sensoren ausgeführt, die mittels Laufzeitmessung arbeiten. Dies wird im Folgenden beispielhaft an der Entfernungsmesseinrichtung 11a erläutert. Die Laserlichtquelle 13 ist zur Erzeugung eines Laserpulses und Aussendung entlang der optischen Achse 12a eingerichtet. Der von dem Segmentstapel 30 reflektierte Laserpuls wird mittels eines Strahlteilers 22 auf ein lichtempfindliches Element 23 gelenkt. Die elektronische Steuereinrichtung 18 kann die Laufzeit eines Laserpulses vom Verlassen der Laserlichtquelle 13 bis zum Eintreffen auf dem lichtempfindlichen Element 23 bestimmen und daraus in bekannter Weise die Entfernung zu dem Segmentstapel 30 ermitteln.

Die Entfernungsmesseinrichtung 11a der Figur 2 kann Fokussieroptiken 19, 21 aufweisen wie die Entfernungsmesseinrichtung 11b der Figur 1.

Am Ausführungsbeispiel gemäß Figur 2 soll erläutert werden, wie der Rotationswinkel φ eines Segments 31 um die Stapelachse y bestimmt werden kann. Dies geschieht mittels mehrerer Entfernungsmesseinrichtungen 11b, 11c, die mit vorzugsweise zueinander parallelen optischen Achsen 12b, 12c in Messbeziehung zu derselben Seitenfläche 32, vorzugsweise an der Längsseite, des Segmentstapels 30 angeordnet sind. Die Differenz a2-a1 der mit den Entfernungsmesseinrichtungen 11b, 11c gemessenen Entfernungen a1 und a2 ist mit dem Rotationswinkel φ des gemessenen Segments 31 über eine trigonometrische Funktion wie folgt verknüpft: tan(φ) = (a2-a1)/d, wobei d der Abstand der optischen Achse 12b, 12c voneinander ist. Durch eine Arcustangens-Bildung kann somit der Rotationswinkel φ erhalten werden: φ = arctan((a2-a1)/d).

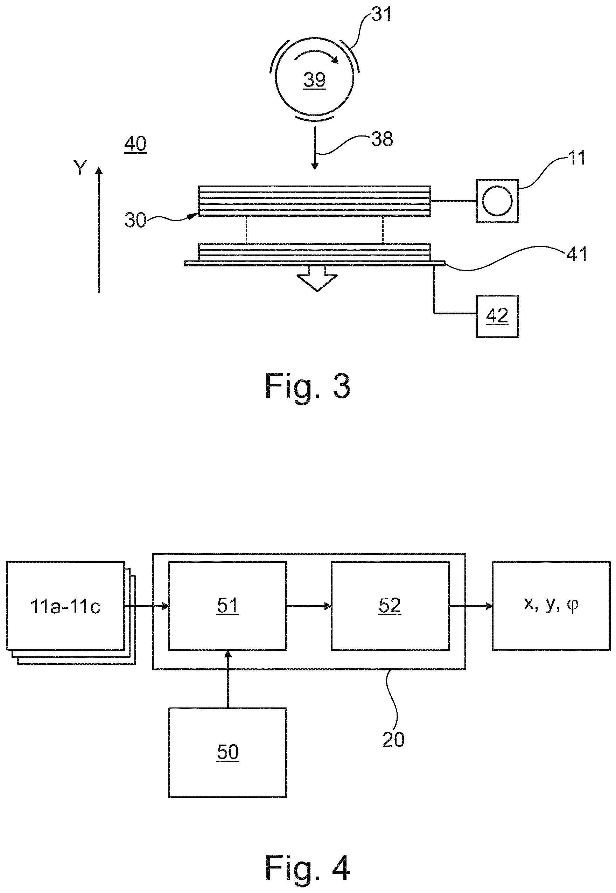

Um die Kontur bzw. das zeitliche Profil des Segmentstapels 30 bestimmen zu können, ist der Segmentstapel 30 vorzugsweise relativ zu der Messvorrichtung entlang der Stapelachse y verstellbar, insbesondere absenkbar. Dies wird im Folgenden anhand der seitlichen Ansicht der Figur 3 erläutert. Die in einem nicht gezeigten Maschinenabschnitt produzierten Segmente 31 werden mittels einer Fördereinrichtung 39, beispielsweise einer rotierend angetriebenen Fördertrommel, angefördert und in einem Stapelabschnitt 40 der Maschine auf den Segmentstapel 30 abgelegt und somit gestapelt. Die hier vertikale Stapelrichtung 38 verläuft also parallel zur der y-Achse.

Die Segmente 31 werden dabei auf einer Ablageeinrichtung 41, beispielsweise ein Ablagetisch oder ein Ablagebehälter, abgelegt, so dass der Segmentstapel 30 auf oder in der Ablageeinrichtung 41 ruht. Die Ablageeinrichtung 41 ist entlang der Stapelachse y verstellbar, insbesondere absenkbar, und wird zu diesem Zweck von einer elektronischen Steuereinrichtung 42 angesteuert. Die elektronische Steuereinrichtung 42 kann in der Auswerteeinheit 20 oder in einer Maschinensteuerung realisiert sein.

Die Entfernungsmesseinrichtung 11 misst mittels einer vorzugsweise festen Abtastrate die Entfernung zum Segmentstapel 30. Nach dem Stapeln der Segmente 31, oder fortlaufend während des Stapelns, wird der Segmentstapel 30 an der Entfernungsmesseinrichtung 11 beispielsweise mit konstanter Geschwindigkeit, oder auf der Grundlage einer Drehgeberinformation der Verstell- bzw. Absenkeinheit, durch Verstellen bzw. Absenken des Ablagetisches entlang der Stapelachse y vorbeigefahren. Auf diese Weise wird ein zeitabhängiges Messsignal der Entfernungsmesseinrichtung 11 erhalten, woraus sich die Kontur bzw. das Profil des Segmentstapels 30 entlang der Stapelachse y ergibt. Die zeitabhängige Messung kann mit einer oder mehreren der Entfernungsmesseinrichtungen 11a-11c durchgeführt werden. Die Entfernungsmesseinrichtung 11 kann daher für jede Entfernungsmesseinrichtung 11a-11c gemäß Figuren 1 und 2 stehen. Zusätzlich oder alternativ können die Entfernungsmesseinrichtungen 11a-11c entlang der Stapelachse y verfahrbar oder absenkbar sein.

Das Mess- und Datenverarbeitungsverfahren ist im Ablaufschema gemäß Figur 4 verdeutlicht. Die Maschine bzw. die Maschinensteuerung liefert die Position 50 der Ablageeinrichtung 41, beispielsweise in Form von Maschinentakten oder Trommelpositionen. Die Auswerteeinheit 20 empfängt die von den Entfernungsmesseinrichtungen 11a-11c gesendeten Messdaten und verknüpft diese im Synchronisierungs-Schritt 51 mit der Ablagestapelposition 50. Es findet demnach im Schritt 51 eine Synchronisierung der beispielsweise freilaufenden Entfernungsmesseinrichtungen 11a-11c und eine Verknüpfung der Messdaten mit Maschinenpositionen statt. Möglich ist auch, dass die Entfernungsmesseinrichtungen 11a-11c durch ein Signal getriggert werden können und infolge des Triggerns einen Messwert aufnehmen. Das entstandene Abbild des Segmentstapels 30 wird mit den entsprechenden Auswertealgorithmen 52 auf die Ablagegenauigkeit untersucht.

Die kontinuierliche Datenströme aller dreier Entfernungsmesseinrichtungen 11a-11c werden mit den Echtzeit-Daten der Maschine zur Segmentlaufzeit verknüpft. Das entstandene Datenfeld liefert somit zu jeder y-Position drei Entfernungswerte von den entsprechenden Entfernungsmesseinrichtungen 11a-11c. Anhand dieser Daten werden die x- und z-Positionen der Segmente 31 und deren Rotationswinkel φ berechnet.

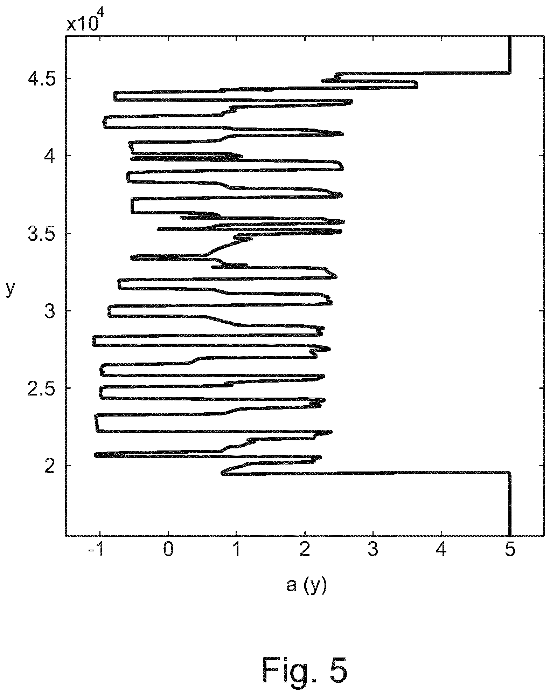

In der Figur 5 ist beispielhaft das Datenfeld einer Entfernungsmesseinrichtung 11 gezeigt. Die Abszisse gibt die von der Entfernungsmesseinrichtung 11 gemessenen Entfernung a an. Die Ordinate entspricht der Stapelachse y, so dass sich hier auch der zeitliche Verlauf der Messung widerspiegelt. In dem Datenfeld gemäß Figur 5 sind die fünfzehn vermessen Segmente 31 deutlich sichtbar.

### Bezugszeichenliste:

- 10: Messvorrichtung
- 11a-c: Entfernungsmesseinrichtungen
- 12a-c: optische Achsen
- 13: Laserlichtquelle
- 14a-c: Laserstrahlen
- 15a-c: reflektierte Laserstrahlen
- 16: bildgebender Sensor
- 18: elektronische Steuereinrichtung
- 19: Fokussieroptik
- 20: Auswerteeinheit
- 21: Fokussieroptik
- 22: Strahlteiler
- 23: lichtempfindliches Element
- 30: Segmentstapel
- 31: Segmente
- 32, 33: Seitenflächen
- 39: Fördereinrichtung
- 40: Stapelabschnitt
- 41: Ablageeinrichtung
- 42: elektronische Steuereinrichtung
- 50: Ablagestapelposition
- 51: Synchronisierungsschritt
- 52: Auswertealgorithmen

## Patentansprüche

1. Messvorrichtung (10) der Energiezellen produzierenden Industrie zur Vermessung der Ausrichtung und/oder Orientierung von Segmenten (31) eines Segmentstapels (30), wobei die Messvorrichtung (10) mindestens drei optische Entfernungsmesseinrichtungen (11a, 11b, 11c) aufweist, die in einer Messbeziehung zu einer Seitenfläche (32, 33) des Segmentstapels (30) angeordnet und zur Messung der Entfernung des Segmentstapels (30) an mindestens einer Position entlang einer Stapelachse y eingerichtet sind, wobei die Messvorrichtung (10) eine Auswerteeinheit (20) umfasst, die zum Auswerten von den Entfernungsmesseinrichtungen (11a, 11b, 11c) übermittelter Messsignale eingerichtet ist, wobei die Messvorrichtung (10) eine Mehrzahl von optischen Entfernungsmesseinrichtungen (11a, 11b, 11c) aufweist, die in einer Messbeziehung zu unterschiedlichen Seitenflächen (32, 33) des Segmentstapels (30) angeordnet sind, wobei die Messvorrichtung (10) eine Mehrzahl von optischen Entfernungsmesseinrichtungen (11b, 11c) aufweist, die in einer Messbeziehung zu derselben Seitenfläche (32) des Segmentstapels (30) an unterschiedlichen Messpositionen angeordnet sind,
**dadurch gekennzeichnet, dass** die Auswerteeinheit (20) zur Ermittlung der Position mindestens eines Segments (31) des Segmentstapels (30) in zwei Richtungen (x, z) senkrecht zu der Stapelachse (y) und dessen Rotationswinkels um die Stapelachse (y) eingerichtet ist.

2. Messvorrichtung (10) nach Anspruch 1, **dadurch gekennzeichnet, dass** die optischen Achsen (12b, 12c) der Entfernungsmesseinrichtungen (11b, 11c) parallel zueinander angeordnet sind und einen positiven Abstand d voneinander aufweisen.

3. Messvorrichtung (10) nach Anspruch 2, **dadurch gekennzeichnet, dass** der Abstand d der optischen Achsen (12b, 12c) voneinander mindestens halb so groß ist wie eine entsprechende Seitenlänge L des Segmentstapels (30).

4. Messvorrichtung (10) nach einem der vorangehenden Ansprüche, **dadurch gekennzeichnet, dass** die Messvorrichtung (10) genau drei optischen Entfernungsmesseinrichtungen (11a, 11b, 11c) aufweist.

5. Messvorrichtung nach einem der vorangehenden Ansprüche, **dadurch gekennzeichnet, dass** mindestens eine oder sämtliche optischen Entfernungsmesseinrichtungen (11a, 11b, 11c) mittels Triangulation und/oder mittels Laufzeitmessung arbeiten.

6. Messvorrichtung nach einem der vorangehenden Ansprüche, **dadurch gekennzeichnet, dass** die oder sämtliche optischen Entfernungsmesseinrichtungen (11a, 11b, 11c) Laserscaneinrichtungen sind, die zur Projektion eines Laserpunkts oder einer Laserlinie auf die entsprechende Seitenfläche (32, 33) des Segmentstapels (30) eingerichtet sind.

7. Maschine zur Herstellung von Energiezellen, umfassend einen Stapelabschnitt (40) zum Stapeln von Segmenten (31) zu einem Segmentstapel (30) auf einer Ablageeinrichtung (41), **dadurch gekennzeichnet, dass** der Stapelabschnitt (40) eine Messvorrichtung (10) nach einem der vorangehenden Ansprüche aufweist.

8. Maschine nach Anspruch 7, **dadurch gekennzeichnet, dass** die Maschine zum gesteuerten Verfahren der Ablageeinrichtung (41) relativ zu der Messvorrichtung (10) entlang einer Stapelachse y eingerichtet ist.

9. Maschine nach Anspruch 8, **dadurch gekennzeichnet, dass** die Auswerteeinheit (20) zur Aufzeichnung der Messwerte über die Zeit und zur Verknüpfung der zeitlichen Messwerte mit einer y-Position der Ablageeinrichtung (41) entlang der Stapelachse eingerichtet ist, wodurch ein positions- und/oder zeitabhängiges Datenfeld erhalten wird.

10. Maschine nach Anspruch 9, **dadurch gekennzeichnet, dass** die Auswerteeinheit (20) zur Auswertung des Datenfelds und zur Ermittlung von einzelnen Segmentpositionen daraus eingerichtet ist.

11. Maschine nach einem der Ansprüche 7 bis 10, **dadurch gekennzeichnet, dass** die Maschine Bereitstellungsmittel A zum Bereitstellen von Elektrodenmaterial des Typs A und/oder Bereitstellungsmittel B zum Bereitstellen von Elektrodenmaterial des Typs B und/oder Bereitstellungsmittel C zum Bereitstellen von Separatormaterial des Typs C, eine Förderanordnung F1A zum Fördern von bahnförmig bereitgestelltem Elektrodenmaterial des Typs A, eine Schneideinrichtung zum Schneiden des bahnförmig bereitgestellten Elektrodenmaterials des Typs A in Segmente (31) des Typs AS, eine Förderanordnung F2A zum Fördern der Segmente (31) des Typs AS aufweist.

12. Maschine nach einem der Ansprüche 7 bis 11, **dadurch gekennzeichnet, dass** die Fördereinrichtung (39) als rotierend antreibbarer Rotationskörper ausgebildet ist, der bevorzugt eine Radial-Gruppe von Erhebungen und/oder eine Radial-Gruppe von Vertiefungen aufweist, die bevorzugt in Umfangsrichtung verteilt und beabstandet zueinander angeordnet sind.

13. Maschine nach einem der Ansprüche 7 bis 12, **dadurch gekennzeichnet, dass** die Maschine ausgebildet und eingerichtet ist, Energiezellen nach einem Z-Faltverfahren herzustellen und in einem Stapelabschnitt (40) auf einer Ablagevorrichtung (41) zur Aufnahme der Segmente (31) einen Stapel zu formen, bei dem die einzelnen Elektrodenlagen voneinander durch eine mäanderförmig um jede Elektrodenlage herumgeführte Separatorbahn voneinander getrennt positioniert sind und bei dem an zwei einander gegenüberliegenden Seiten mehrere Faltabschnitte der Separatorbahn in vertikaler Richtung übereinander liegend ausgebildet sind.

14. Verfahren zur Herstellung von Energiezellen, wobei Segmente (31) zu einem Segmentstapel (30) gestapelt werden, **dadurch gekennzeichnet, dass** mittels mindestens dreier optischer Entfernungsmesseinrichtungen (11a, 11b, 11c), die in einer Messbeziehung zu einer Seitenfläche (32, 33) des Segmentstapels (30) angeordnet wird, die Entfernung des Segmentstapels (30) an mindestens einer Position entlang einer Stapelachse y gemessen wird, wobei eine Mehrzahl von optischen Entfernungsmesseinrichtungen (11a, 11b, 11c) in einer Messbeziehung zu unterschiedlichen Seitenflächen (32, 33) des Segmentstapels (30) angeordnet sind, wobei eine Mehrzahl von optischen Entfernungsmesseinrichtungen (11b, 11c) in einer Messbeziehung zu derselben Seitenfläche (32) des Segmentstapels (30) an unterschiedlichen Messpositionen angeordnet sind,
umfassend die Schritte:
- Auswerten von den Entfernungsmesseinrichtungen (11a, 11b, 11c) übermittelter Messsignale in einer Auswerteeinheit (20);
- Ermittlung der Position mindestens eines Segments (31) des Segmentstapels (30) in zwei Richtungen (x, z) senkrecht zu der Stapelachse (y) und dessen Rotationswinkels um die Stapelachse (y) in der Auswerteeinheit (20).

15. Verfahren nach Anspruch 14, **dadurch gekennzeichnet, dass** eine Ablageeinrichtung (41) für den Segmentstapel (30) relativ zu der Messvorrichtung (10) entlang einer Stapelachse y gesteuert verfahrbar ist.

## Claims

1. Measuring apparatus (10) for the energy-cell-manufacturing industry, which apparatus is intended for measuring the alignment and/or orientation of segments (31) of a segment stack (30), the measuring apparatus (10) comprising at least three optical distance measuring devices (11a, 11b, 11c) which are arranged in a measurement relationship with a side face (32, 33) of the segment stack (30) and are configured to measure the distance of the segment stack (30) at at least one position along a stack axis y, the measuring apparatus (10) comprising an evaluation unit (20) which is configured to evaluate measurement signals transmitted by the distance measuring devices (11a, 11b, 11c), the measuring apparatus (10) comprising a plurality of optical distance measuring devices (11a, 11b, 11c) which are arranged in a measurement relationship with different side faces (32, 33) of the segment stack (30), the measuring apparatus (10) comprising a plurality of optical distance measuring devices (11b, 11c) which are arranged at different measuring positions in a measurement relationship with the same side face (32) of the segment stack (30),
**characterized in that** the evaluation unit (20) is configured to determine the position of at least one segment (31) of the segment stack (30) in two directions (x, z) perpendicular to the stack axis (y) and the angle of rotation thereof about the stack axis (y).

2. Measuring apparatus (10) according to claim 1, **characterized in that** the optical axes (12b, 12c) of the distance measuring devices (11b, 11c) are arranged parallel to one another and have a positive distance d from one another.

3. Measuring apparatus (10) according to claim 2, **characterized in that** the distance d of the optical axes (12b, 12c) from one another is at least half as large as a corresponding side length L of the segment stack (30).

4. Measuring apparatus (10) according to any of the preceding claims, **characterized in that** the measuring apparatus (10) comprises exactly three optical distance measuring devices (11a, 11b, 11c).

5. Measuring apparatus according to any of the preceding claims, **characterized in that** at least one or all optical distance measuring devices (11a, 11b, 11c) operate by means of triangulation and/or by means of time-of-flight measurement.

6. Measuring apparatus according to any of the preceding claims, **characterized in that** the or all optical distance measuring devices (11a, 11b, 11c) are laser scanning devices which are configured to project a laser point or laser line onto the corresponding side face (32, 33) of the segment stack (30).

7. Machine for manufacturing energy cells, comprising a stacking portion (40) for stacking segments (31) to form a segment stack (30) on a storage device (41), **characterized in that** the stacking portion (40) comprises a measuring apparatus (10) according to any of the preceding claims.

8. Machine according to claim 7, **characterized in that** the machine is configured to move the storage device (41) in a controlled manner relative to the measuring apparatus (10) along a stack axis y.

9. Machine according to claim 8, **characterized in that** the evaluation unit (20) is configured to record the measured values over time and to link the temporal measured values with a y-position of the storage device (41) along the stack axis, thereby obtaining a position-dependent and/or time-dependent data field.

10. Machine according to claim 9, **characterized in that** the evaluation unit (20) is configured to evaluate the data field and to determine individual segment positions therefrom.

11. Machine according to any of claims 7 to 10, **characterized in that** the machine comprises supply means A for supplying electrode material of type A and/or supply means B for supplying electrode material of type B and/or supply means C for supplying separator material of type C, a conveying arrangement F1A for conveying electrode material of type A provided in web form, a cutting device for cutting the electrode material of type A provided in web form into segments (31) of type AS, and a conveying arrangement F2A for conveying the segments (31) of type AS.

12. Machine according to any of claims 7 to 11, **characterized in that** the conveying device (39) is designed as a rotationally drivable rotating body, which preferably has a radial group of protrusions and/or a radial group of depressions which are preferably arranged distributed in the circumferential direction and spaced apart from one another.

13. Machine according to any of claims 7 to 12, **characterized in that** the machine is designed and configured to manufacture energy cells according to a Z-folding method and to form a stack in a stacking portion (40) on a storage device (41) for receiving the segments (31), in which stack the individual electrode layers are positioned so as to be separated from one another by a separator web meandering around each electrode layer and in which stack, on two opposite sides, a plurality of folded portions of the separator web are arranged one above the other in a vertical direction.

14. Method for manufacturing energy cells, segments (31) being stacked to form a segment stack (30), **characterized in that**, by means of at least three optical distance measuring devices (11a, 11b, 11c) which are arranged in a measurement relationship with a side face (32, 33) of the segment stack (30), the distance of the segment stack (30) at at least one position along a stack axis y is measured, a plurality of optical distance measuring devices (11a, 11b, 11c) being arranged in a measurement relationship with different side faces (32, 33) of the segment stack (30), a plurality of optical distance measuring devices (11b, 11c) being arranged at different measuring positions in a measurement relationship with the same side face (32) of the segment stack (30), the method comprising the steps of:
- evaluating measurement signals transmitted by the distance measuring devices (11a, 11b, 11c) in an evaluation unit (20);
- determining the position of at least one segment (31) of the segment stack (30) in two directions (x, z) perpendicular to the stack axis (y) and the angle of rotation thereof about the stack axis (y) in the evaluation unit (20).

15. Method according to claim 14, **characterized in that** a storage device (41) for the segment stack (30) is movable in a controlled manner relative to the measuring apparatus (10) along a stack axis y.

## Revendications

1. Dispositif de mesure (10) de l'industrie de fabrication de cellules énergétiques, destiné à mesurer l'alignement et/ou l'orientation de segments (31) d'une pile de segments (30), le dispositif de mesure (10) présentant au moins trois moyens de mesure de distance optiques (11a, 11b, 11c) qui sont disposés par rapport à une surface latérale (32, 33) de la pile de segments (30) dans le but de la mesure et sont conçus pour mesurer la distance de la pile de segments (30) à au moins une position le long d'un axe de pile y, le dispositif de mesure (10) comprenant une unité d'évaluation (20) qui est conçue pour évaluer des signaux de mesure transmis par les moyens de mesure de distance (11a, 11b, 11c), le dispositif de mesure (10) présentant une pluralité de moyens de mesure de distance optiques (11a, 11b, 11c) qui sont disposés par rapport à différentes surfaces latérales (32, 33) de la pile de segments (30) dans le but de la mesure, le dispositif de mesure (10) présentant une pluralité de moyens de mesure de distance optiques (11b, 11c) qui sont disposés par rapport à la même surface latérale (32) de la pile de segments (30) dans le but de la mesure à différentes positions de mesure,
**caractérisé en ce que** l'unité d'évaluation (20) est conçue pour déterminer la position d'au moins un segment (31) de la pile de segments (30) dans deux directions (x, z) perpendiculaires à l'axe de pile (y) et son angle de rotation autour de l'axe de pile (y).

2. Dispositif de mesure (10) selon la revendication 1, **caractérisé en ce que** les axes optiques (12b, 12c) des moyens de mesure de distance (11b, 11c) sont disposés parallèlement les uns aux autres et présentent entre eux un écart positif d.

3. Dispositif de mesure (10) selon la revendication 2, **caractérisé en ce que** l'écart d des axes optiques (12b, 12c) entre eux est au moins égal à la moitié d'une longueur latérale L correspondante de la pile de segments (30).

4. Dispositif de mesure (10) selon l'une des revendications précédentes, **caractérisé en ce que** le dispositif de mesure (10) présente exactement trois moyens de mesure de distance optiques (11a, 11b, 11c).

5. Dispositif de mesure selon l'une des revendications précédentes, **caractérisé en ce qu'**au moins un ou tous les moyens de mesure de distance optiques (11a, 11b, 11c) fonctionnent par triangulation et/ou par mesure du temps de propagation.

6. Dispositif de mesure selon l'une des revendications précédentes, **caractérisé en ce que** le ou tous les moyens de mesure de distance optiques (11a, 11b, 11c) sont des moyens de balayage laser conçus pour projeter un point laser ou une ligne laser sur la surface latérale correspondante (32, 33) de la pile de segments (30).

7. Machine de fabrication de cellules énergétiques, comprenant une section d'empilage (40) destinée à empiler des segments (31) pour former une pile de segments (30) sur un moyen de dépose (41),
**caractérisée en ce que** la section d'empilage (40) présente un dispositif de mesure (10) selon l'une des revendications précédentes.

8. Machine selon la revendication 7, **caractérisée en ce que** la machine est conçue pour déplacer de manière commandée le moyen de dépose (41) par rapport au dispositif de mesure (10) le long d'un axe de pile y.

9. Machine selon la revendication 8, **caractérisée en ce que** l'unité d'évaluation (20) est conçue pour enregistrer les valeurs de mesure en fonction du temps et pour associer les valeurs de mesure dans le temps à une position y du moyen de dépose (41) le long de l'axe de pile, ce qui permet d'obtenir un champ de données en fonction de la position et/ou du temps.

10. Machine selon la revendication 9, **caractérisée en ce que** l'unité d'évaluation (20) est conçue pour évaluer le champ de données et pour déterminer les positions individuelles des segments à partir de celui-ci.

11. Machine selon l'une des revendications 7 à 10, **caractérisée en ce que** la machine présente des moyens de fourniture A pour fournir du matériau d'électrode de type A et/ou des moyens de fourniture B pour fournir du matériau d'électrode de type B et/ou des moyens de fourniture C pour fournir du matériau de séparateur de type C, un agencement de transport F1A pour transporter du matériau d'électrode de type A fourni sous forme de bande, un moyen de découpe pour découper le matériau d'électrode de type A fourni sous forme de bande en segments (31) de type AS, un agencement de transport F2A pour transporter les segments (31) de type AS.

12. Machine selon l'une des revendications 7 à 11, **caractérisée en ce que** le moyen de transport (39) est conçu comme un corps de révolution pouvant être entraîné en rotation, qui présente de préférence un groupe radial de saillies et/ou un groupe radial de creux qui sont de préférence répartis dans la direction circonférentielle et espacés les uns des autres.

13. Machine selon l'une des revendications 7 à 12, **caractérisée en ce que** la machine est réalisée et conçue pour fabriquer des cellules énergétiques selon un procédé de pliage en Z et pour former, dans une section d'empilage (40), une pile sur un dispositif de dépose (41) destiné à recevoir les segments (31), dans laquelle les différentes couches d'électrodes sont positionnées de manière à être séparées les unes des autres par une bande de séparateur guidée en méandres autour de chaque couche d'électrode et dans laquelle, sur deux côtés opposés, plusieurs sections pliées de la bande de séparateur sont formées de manière à se superposer dans la direction verticale.

14. Procédé de fabrication de cellules énergétiques, dans lequel des segments (31) sont empilés pour former une pile de segments (30), **caractérisé en ce qu'**à l'aide d'au moins trois moyens de mesure de distance optiques (11a, 11b, 11c), qui sont disposés par rapport à une surface latérale (32, 33) de la pile de segments (30) dans le but de mesure, la distance de la pile de segments (30) est mesurée à au moins une position le long d'un axe de pile y, une pluralité de moyens de mesure de distance optiques (11a, 11b, 11c) étant disposés par rapport à différentes surfaces latérales (32, 33) de la pile de segments (30) dans le but de mesure, une pluralité de moyens de mesure de distance optiques (11b, 11c) étant disposés par rapport à la même surface latérale (32) de la pile de segments (30) dans le but de mesure à différentes positions de mesure,
comprenant les étapes suivantes :
- évaluation, dans une unité d'évaluation (20), des signaux de mesure transmis par les moyens de mesure de distance (11a, 11b, 11c) ;
- détermination, dans l'unité d'évaluation (20), de la position d'au moins un segment (31) de la pile de segments (30) dans deux directions (x, z) perpendiculaires à l'axe de pile (y) et de son angle de rotation autour de l'axe de pile (y).

15. Procédé selon la revendication 14, **caractérisé en ce qu'**un moyen de dépose (41) pour la pile de segments (30) peut être déplacé de manière commandée par rapport au dispositif de mesure (10) le long d'un axe de pile y.
